Europäisches Patentamt

European Patent Office

Office européen des brevets

(19)

(11) Numéro de publication : **0 401 133 B1**

(12)

# FASCICULE DE BREVET EUROPEEN

(45) Date de publication du fascicule du brevet :
**11.11.92 Bulletin 92/46**

(51) Int. Cl.⁵ : **G01G 3/14,** G01L 1/22

(21) Numéro de dépôt : **90420251.2**

(22) Date de dépôt : **23.05.90**

(54) **Dispositif de pesage à jauges de contrainte.**

(30) Priorité : **30.05.89 FR 8907489**

(43) Date de publication de la demande :
**05.12.90 Bulletin 90/49**

(45) Mention de la délivrance du brevet :
**11.11.92 Bulletin 92/46**

(84) Etats contractants désignés :
**AT BE CH DE DK ES FR GB GR IT LI LU NL SE**

(56) Documents cités :
**EP-A- 0 086 874**
**EP-A- 0 089 209**
**EP-A- 0 153 121**
**EP-A- 0 295 067**
**CH-A- 658 909**
**PATENT ABSTRACTS OF JAPAN vol. 6, no. 82**
**(P-116)(960) 20 mai 1982, & JP-A-57 20630**
**(MATSUSHITA DENKI SANGYO K.K.) 03février**
**1982,**

(73) Titulaire : **TERRAILLON (société anonyme)**
**Route de Thonon Juvigny**
**F-74100 Annemasse (FR)**

(72) Inventeur : **Bizet, Bruno**
**Rue Ambroise Paré, Résidence du Grand Pré**
**F-71850 Charnay Les Macon (FR)**
Inventeur : **Colloud, Alain**
**Reyvroz**
**F-74200 Thonon Les Bains (FR)**
Inventeur : **Lavillat, Bernard**
**9 quater avenue d'Albigny**
**F-74000 Annecy (FR)**

(74) Mandataire : **de Beaumont, Michel**
**Cabinet Poncet 7, chemin de Tillier B.P. 317**
**F-74008 Annecy RP Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les cellules de charge, utilisables notamment dans la réalisation de balances de pesée telles qu'un pèse-personne, pèse-aliments ou tout autre appareil de pesage à plateau.

Les appareils de pesage à plateau sont généralement constitués d'un socle destiné à reposer sur le sol, et d'un plateau sensiblement parallèle à ce socle. Le plateau est destiné à recevoir la charge à peser.

Entre le socle et le plateau est disposée une cellule de charge comportant des jauges de contrainte connectées électriquement suivant un pont de Wheatstone et délivrant un signal électrique proportionnel à la charge appliquée sur le plateau. La cellule de charge comprend une barre de flexion, élastiquement déformable, disposée selon une direction sensiblement perpendiculaire à la direction de l'effort à mesurer, c'est-à-dire sensiblement parallèle au plateau. Un montant mobile relie le plateau à une première extrémité de la barre de flexion, le montant mobile étant généralement parallèle à la direction de l'effort à mesurer. Un montant fixe, également généralement parallèle à la direction de l'effort à mesurer, relie le socle et la seconde extrémité de la barre de flexion. Les jauges de contrainte sont fixées sur la surface de la barre de flexion, et sont sensibles aux allongements et racourcissements de ladite surface engendrés par la flexion de ladite barre. Une telle structure est par exemple décrite dans le document FR-A-2 177 923.

La difficulté de ces cellules de charges réside dans le fait que le signal électrique que l'on obtient est sensible à la position de la charge sur le plateau. On constate en effet que les caractéristiques de flexion de la barre de flexion varient d'une part en fonction de l'excentration longitudinale de la charge sur le plateau, ou position dans le sens de la longueur de la barre de flexion, et d'autre part en fonction de l'excentration transversale de la charge sur le plateau, ou position dans le sens perpendiculaire à la longueur de la barre de flexion. Le déplacement longitudinal de la charge introduit une variation du couple de torsion appliqué à la première extrémité de la barre de flexion par le montant mobile selon un axe transversal. Le déplacement de la charge transversalement sur le plateau introduit une variation du couple de torsion appliqué sur la première extrémité de la barre de flexion par le montant mobile selon un axe longitudinal. Ces contraintes de torsion déforment la barre de flexion et perturbent la mesure de sa flexion par les jauges de contrainte.

Dans le document FR-A-2 177 923, on compense les effets de déplacement longitudinal de la charge sur le plateau en disposant plusieurs jauges de contrainte selon au moins deux zones décalées longitudinalement sur la barre de flexion. Le dispositif reste cependant sensible au déplacement de la charge selon une direction transversale.

On connaît des cellules de charge réalisées en un seul bloc et usinées de façon à les rendre insensibles aux excentrations transversales de charge. De telles cellules de charge, décrites par exemple dans les documents EP-A-0 153 121 ou EP-A-0 089 209, sont toutefois très onéreuses du fait des usinages précis qu'elles nécessitent. Ces usinages doivent être assurés par approximations successives, et dépendent d'un grand nombre de paramètres, rendant illusoire une fabrication en série sans reprise.

Le document WO-A-8 402 186 enseigne de rendre une telle cellule de charge insensible aux excentrations transversales de charge en utilisant des jauges de contrainte supplémentaires sensibles à la torsion de la barre de flexion. Cette solution implique d'utiliser des jauges supplémentaires, qui doivent être disposées de manière très précise sur la barre de flexion, et nécessite l'ajustage ultérieur des signaux électriques. L'expérience montre que cet ajustage est le plus souvent insuffisant, et nécessite un usinage précis de la barre de flexion. On est en outre conduit à multiplier les jauges de contrainte, ce qui multiplie les connexions à réaliser lors du montage, multiplie les risques de pannes, et augmente sensiblement le coût.

Le document CH-A-658 909 enseigne de réduire les écarts de mesure dûs aux excentrations de charge, en utilisant deux lames (A1, A2) de mêmes longueurs (1), parallèles l'une à l'autre, de mêmes largeurs, espacées d'une distance constante (A). Deux jauges de contrainte (D1, D2) sont disposées sur la première lame (A1) en des positions écartées vers les extrémités de la lame. Il apparaît toutefois qu'une telle structure à deux lames réduit sensiblement les déformations subies par l'ensemble des deux lames (A1, A2) pour un même effort de flexion, et divise la sensibilité du dispositif. En outre, la présence des deux lames plates augmente sensiblement le temps d'amortissement des oscillations lorsque l'on pose une charge sur le dispositif, ce qui gêne considérablement l'utilisation.

Ainsi, les solutions connues nécessitent des ajustements onéreux lors de la fabrication des dispositifs de pesée, ou diminuent la sensibilité et les capacités d'amortissement mécanique de la cellule de charge.

Un problème proposé par la présente invention est de réaliser une cellule de charge à jauges de contrainte, de conception et de structure simples pour être à faible prix de revient, qui présente une bonne sensibilité et un faible temps d'amortissement des oscillations, et qui, par construction, soit pratiquement insensible aux excentrations de charge, longitudinales et/ou transversales.

Selon l'invention, ces avantages sont obtenus sans multiplier le nombre de jauges de contrainte, et sans nécessiter de réglage et d'usinage précis lors de la fabrication.

En outre, un autre problème proposé par l'invention est d'obtenir l'insensibilité aux excentrations longitudinales de charge tout en évitant de disperser les jauges de contrainte selon plusieurs zones réparties sur la longueur de la barre de flexion. Une telle dispersion complique en effet les opérations de connexion électrique lors du montage. Ainsi, l'invention permet de rassembler toutes les jauges de contrainte dans une seule zone de la barre de flexion.

Pour cela, une première idée qui est à la base de l'invention consiste à utiliser une cellule de charge à deux poutres de flexion, en spécialisant les deux poutres de flexion afin de leur faire remplir à chacune des fonctions particulières : une première poutre relativement épaisse et étroite, portant les jauges de contrainte, augmente la sensibilité de la mesure et augmente l'amortissement mécanique ; une seconde poutre, relativement mince et large reprend les efforts de torsion d'axe longitudinal sans diminuer exagérément la sensibilité de mesure.

Une seconde idée qui est à la base de l'invention résulte de l'observation surprenante selon laquelle les effets d'une décentration longitudinale de la charge sont notablement modifiés lorsque les deux poutres de flexion sont non parallèles l'une par rapport à l'autre.

Ainsi pour atteindre ces objets ainsi que d'autres, la cellule de charge selon l'invention comprend :

- une première poutre de flexion élastiquement déformable disposée selon une direction sensiblement perpendiculaire à la direction de l'effort à mesurer,
- une seconde poutre de flexion élastiquement déformable disposée selon une direction sensiblement parallèle à la première poutre de flexion,
- un montant mobile solidaire d'une première extrémité des poutres de flexion et généralement parallèle à la direction de l'effort à mesurer, destiné à être solidaire d'un plateau recevant la charge à mesurer,
- un montant fixe solidaire de la seconde extrémité des poutres de flexion et généralement parallèle à la direction de l'effort à mesurer, destiné à être solidaire d'un socle,
- des jauges de contrainte, fixées sur la surface de la première poutre de flexion, et destinées à être raccordées électriquement à un circuit électrique de mesure pour fournir un signal électrique fonction de la déformation de flexion de la première poutre de flexion sous l'action de l'effort mécanique appliqué entre les montants fixe et mobile ;
- la première poutre de flexion est une barre de flexion élastiquement flexible, peu aplatie, présentant une épaisseur E et une largeur 1, et portant les jauges de contrainte sur l'une au moins de ses faces supérieure ou inférieure généralement perpendiculaires à la direction de l'effort à mesurer ;

- la seconde poutre de flexion est une lame élastiquement flexible, plate et large, de faible épaisseur e, de grande largeur L, disposée dans le plan généralement perpendiculaire à la direction de l'effort à mesurer ;
- l'épaisseur E de la barre de flexion est supérieure à l'épaisseur e de la lame, la largeur L de la lame étant supérieure à la largeur l de la barre de flexion.

Une telle structure de cellule de charge présente, par construction, une bonne insensibilité aux excentrations transversales de charge, une bonne sensibilité de mesure, un bon amortissement des oscillations mécaniques.

Dans les applications à un dispositif de pesage à plateau récepteur, le montant mobile est solidaire d'un plateau récepteur de charge se développant selon une longueur L1 parallèlement à la barre de flexion et selon une largeur L2 perpendiculairement à la barre de flexion ; la lame secondaire présente avantageusement une largeur sensiblement constante et voisine de la largeur L2 du plateau récepteur de charge.

Selon une réalisation, on peut augmenter l'insensibilité aux excentrations longitudinales de la charge en disposant les jauges de contrainte en deux zones symétriques le long de la première barre de flexion.

Selon une réalisation avantageuse, les jauges de contrainte sont disposées en une zone unique de la barre de flexion, à l'écart de la zone centrale. Dans ce cas, les premières extrémités respectives de la barre de flexion et de la lame secondaire sont écartées l'une de l'autre d'une distance D1 supérieure à la distance D2 séparant leurs secondes extrémités respectives. De cette manière, la barre de flexion fait avec la lame secondaire un angle A dont la valeur est déterminée lors de la conception de la cellule de charge de manière à compenser les effets de décentration longitudinale de l'effort. Un intérêt important de ce mode de réalisation est que l'on évite les ajustements délicats de position des jauges de contrainte, ajustements qui sont indispensables dans les modes de réalisation à plusieurs zones de collage de jauges de contrainte.

Ce mode de compensation des effets de décentration longitudinale des efforts peut être utilisé dans toutes les structures de cellule de charge à deux poutres de flexion. Une première possibilité consiste à l'utiliser avec deux poutres de flexion identiques. Une possibilité avantageuse consiste à l'utiliser avec deux poutres de flexion différentes et spécialisées, à savoir une première poutre relativement épaisse et étroite associée à une seconde poutre relativement mince et large.

D'autres objets, caractéristiques et avantages de la présente invention ressortiront de la description suivante de modes de réalisation particuliers, faite en relation avec les figures jointes, parmi lesquelles :

- la figure 1 est une vue en perspective d'une cellule de charge selon l'invention associée à un plateau récepteur de charge et à un socle ;

- la figure 2 représente schématiquement en vue de côté une cellule de charge selon un premier mode de réalisation de l'invention ;

- la figure 3 représente la cellule de charge de la figure 2 en vue de dessus, montant mobile partiellement coupé ;

- les figures 4 et 5 illustrent, à plus grande échelle, la constitution des jauges de contrainte de la figure 3 ;

- la figure 6 représente schématiquement, en vue de côté, une cellule de charge selon un second mode de réalisation de l'invention ;

- la figure 7 représente en vue de dessus la cellule de charge de la figure 6, montant mobile partiellement coupé ;

- les figures 8 et 9 illustrent, à plus grande échelle, une disposition possible des jauges de contrainte de la figure 7 ;

- les figures 10 et 11 illustrent, à plus grande échelle, une autre disposition possible des jauges de contrainte de la figure 7 ;

- la figure 12 illustre schématiquement, en vue de côté, une cellule de charge selon un troisième mode de réalisation de l'invention ;

- la figure 13 représente la cellule de charge de la figure 12 en vue de dessus, montant mobile partiellement coupé ;

- la figure 14 représente, à plus grande échelle, la disposition des jauges de contrainte de la figure 13 ; et

- la figure 15 illustre le schéma électrique de connexion des jauges de contrainte.

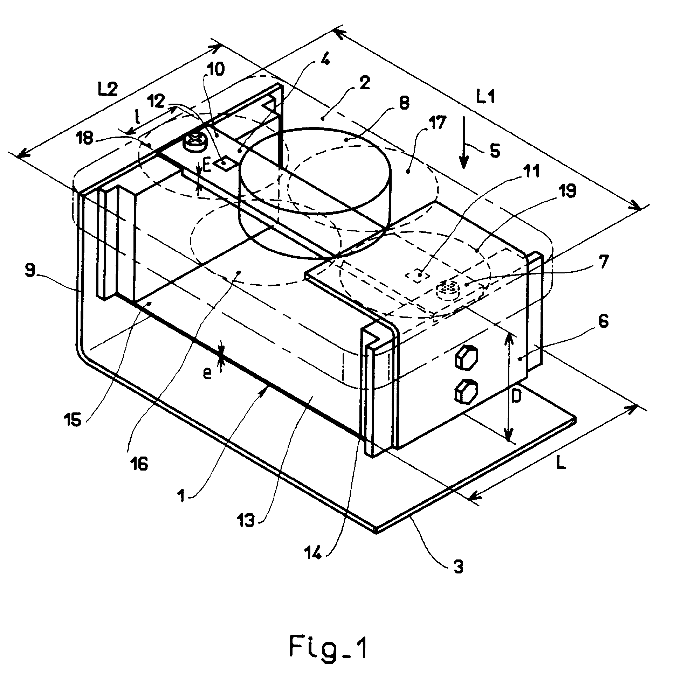

Dans le mode de réalisation représenté sur la figure 1, le dispositif de l'invention comprend une cellule de charge 1, un plateau récepteur de charge 2 et un socle 3.

La cellule de charge 1 comprend une barre de flexion 4, élastiquement déformable par flexion, disposée selon une direction sensiblement perpendiculaire à la direction 5 de l'effort à mesurer. Un montant mobile 6 est solidaire d'une première extrémité 7 de la barre de flexion 4, et est sensiblement parallèle à la direction 5 de l'effort à mesurer. Le montant mobile 6 est solidaire du plateau récepteur de charge 2 destiné à recevoir la charge 8 à mesurer. Un montant fixe 9 est solidaire de la seconde extrémité 10 de la barre de flexion 4, et est sensiblement parallèle à la direction 5 de l'effort à mesurer. Le montant fixe 9 est solidaire du socle 3. Des jauges de contrainte sont fixées sur la surface de la barre de flexion 4, et sont raccordées électriquement à un circuit électrique de mesure, non représenté sur la figure, pour fournir un signal électrique fonction de la déformation de flexion de la barre de flexion 4 sous l'action de l'effort mécanique produit par le poids de la charge 8 posée sur le plateau 2. Dans la réalisation représentée sur la figure 1, les jauges de contrainte sont disposées selon deux zones distinctes 11 et 12, respectivement au voisinage de la première extrémité 7 et de la seconde extrémité 10 de la barre de flexion 4, à égales distances du milieu de la barre. Les zones 11 et 12 sont situées sur l'une des faces de barre de flexion 4 qui sont parallèles au plateau 2.

Une lame secondaire 13, de forme plate et large comme le représente la figure, est disposée à l'écart de la barre de flexion 4 selon un plan sensiblement perpendiculaire à la direction 5 de l'effort à mesurer. La lame secondaire 13 est élastiquement déformable par flexion, et est fixée respectivement selon sa première extrémité 14 au montant mobile 6 et selon sa seconde extrémité 15 au montant fixe 9. La lame secondaire 13 se trouve sensiblement parallèle à la barre de flexion 4, de laquelle elle est séparée d'une distance D dans la direction 5 de l'effort à mesurer.

Lorsqu'on déplace la charge 8 depuis sa position centrale, représentée en traits pleins sur la figure 1, vers ses positions décentrées latéralement 16 et 17, la charge 8 produit un couple de torsion d'axe longitudinal sur la cellule de charge 1. La présence de la lame secondaire 13 réduit très sensiblement l'angle de torsion de la cellule de charge 1 produit par le couple de torsion de la charge 8 selon l'axe longitudinal. Il en résulte que la présence de la lame secondaire 13 rend pratiquement négligeable l'effet des décentrations transversales de la charge 8 sur le plateau 2. Pour assurer une bonne reprise des efforts de torsion, on a intérêt à utiliser une lame secondaire 13 dont la largeur L est la plus grande possible. En pratique, pour une application à une balance comportant un plateau 2 de longueur L1 et de largeur L2, la longueur L1 étant la dimension parallèle à la longueur de la barre de flexion 4, on utilise avantageusement une lame secondaire 13 dont la largeur L est sensiblement constante et voisine de la largeur L2 du plateau récepteur de charge 2.

Par ailleurs, pour obtenir une bonne sensibilité de la mesure de l'effort, on peut avantageusement utiliser une barre de flexion 4 dont la largeur est relativement réduite et dont l'épaisseur est relativement grande. Dans ces conditions, les variations de longueur ou de largeur superficielles subies par les jauges de contrainte placées sur la surface supérieure ou la surface inférieure de la barre de flexion sont maximisées. Simultanément, il faut éviter de diminuer la flexion de la barre pour une charge donnée, afin de conserver une bonne sensibilité. On doit donc avantageusement utiliser une lame secondaire 13 dont la raideur est faible en comparaison de la raideur de la barre de flexion 4, de sorte que la lame secondaire 13 ne diminue pas sensiblement la flexion de la barre de flexion 4 pour une charge donnée. Pour cela, dans le sens des flexions produites par l'effort à mesurer tel que l'effort de la charge 8, la raideur de la barre de flexion 4 est choisie très supérieure à la raideur de la lame secondaire 13. Cette différence est obtenue par exemple en utilisant une barre de flexion 4 dont la section présente une épaisseur E relativement importante par rapport à sa largeur 1, alors que la lame secondaire 13 est plate et large, c'est-à-dire qu'elle présente une épaisseur e beaucoup plus faible par rapport à sa largeur L. On peut accentuer la différence en réalisant la barre de flexion 4 et la lame secondaire 13 en des matériaux différents choisis de manière appropriée.

A titre d'exemple, de bons résultats ont été obtenus avec une cellule de charge dont les constituants présentent sensiblement les dimensions suivantes, données à titre indicatif :

- largeur L de la lame secondaire 13 : 44 millimètres ;
- épaisseur e de la lame secondaire 13 : 0.35 millimètre ;
- largeur l de la barre de flexion 4 : 18 millimètres ;
- épaisseur E de la barre de flexion 4 : 3 millimètres ;
- longueur de la cellule de charge : 125 millimètres ;
- distance D entre les deux poutres de flexion : 53 millimètres ;
- matière de la lame secondaire 13 : acier ;
- matière de la barre de flexion 4 : alliage d'aluminium tel que AU4G.

Lorsque l'on diminue la distance D entre les deux poutres de flexion, il convient d'augmenter simultanément la largeur L de la lame secondaire 13 pour obtenir la même insensibilité aux excentrations transversales de charge. Ainsi, pour une distance D égale à 20 millimètres environ, il convient de choisir une largeur L égale à 50 millimètres environ.

Une cellule de charge telle que celle décrite ci-dessus convient pour la mesure de charges jusqu'à 5 kilogrammes environ.

Dans les exemples ci-dessus, la largeur L de la lame secondaire 13 est égale à au moins deux fois la largeur l de la barre de flexion 4, tandis que son épaisseur e est très inférieure à l'épaisseur E de la barre de flexion, le rapport des épaisseurs étant voisin de 10.

On peut avantageusement utiliser une barre de flexion 4 dont la largeur l est au plus égale à 20 fois son épaisseur E, tandis que la lame secondaire 13 présente une largeur L égale à au moins 50 fois son épaisseur e. Dans ces conditions, lorsque la largeur L de la lame secondaire 13 est au moins le double de la largeur l de la barre de flexion 4, la cellule de charge présente une bonne sensibilité de mesure et de bonnes propriétés d'amortissement des oscillations mécaniques.

La réduction ou la compensation des perturbations introduites par la décentration de la charge 8 dans le sens longitudinal peut être assurée de différentes manières. Lorsque la charge 8 est déplacée longitudinalement, par exemple pour prendre sa position 18 ou sa position 19, la présence de la lame secondaire 13 réduit très sensiblement les déformations induites sur la barre de flexion 4, par rapport à une cellule de charge l qui ne comporterait qu'une seule barre de flexion. La décentration longitudinale introduit toutefois des efforts de compression ou de traction axiales de la barre de flexion 4 et de la lame secondaire 13, et l'on peut constater une légère déformation de la barre de flexion 4, déformation induisant une variation du signal électrique mesuré.

Pour compenser de telles variations dues à la décentration longitudinale, on peut utiliser une technique connue consistant à disposer les jauges de contrainte selon au moins deux zones 11 et 12 décalées longitudinalement le long de la barre de flexion 4 et à égales distances du milieu de ladite barre. De cette manière, les jauges correspondantes des zones différentes sont soumises à des contraintes distinctes lors de la flexion de la barre 4, mais la combinaison des jauges permet de produire un signal électrique sensiblement indépendant de l'excentration longitudinale de l'effort.

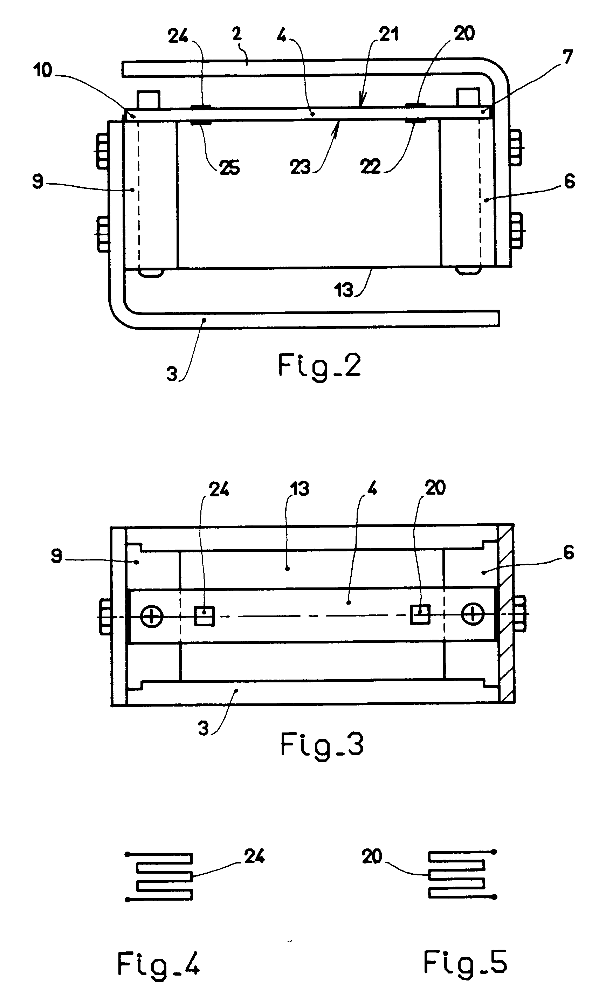

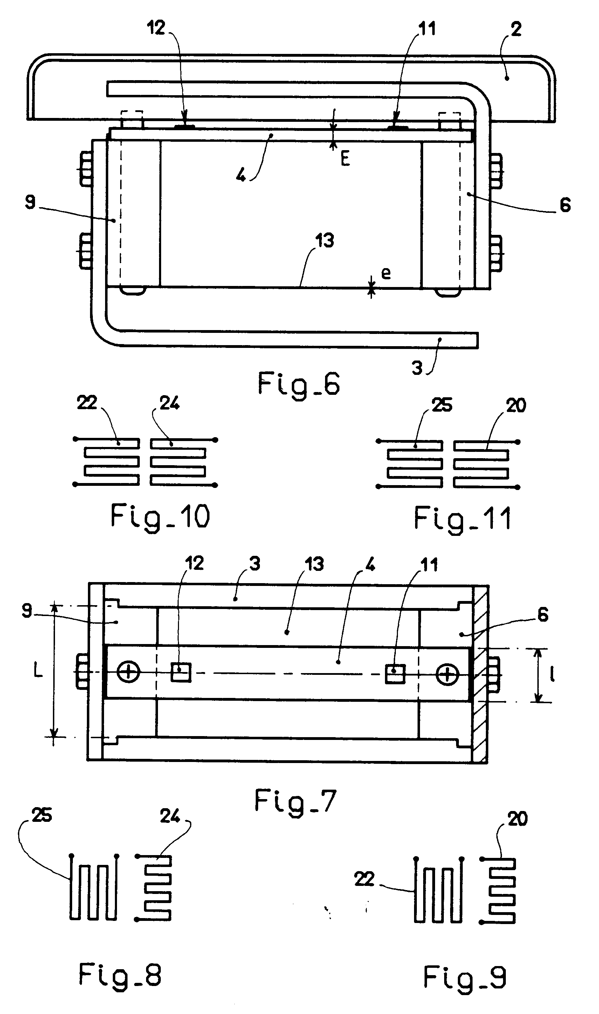

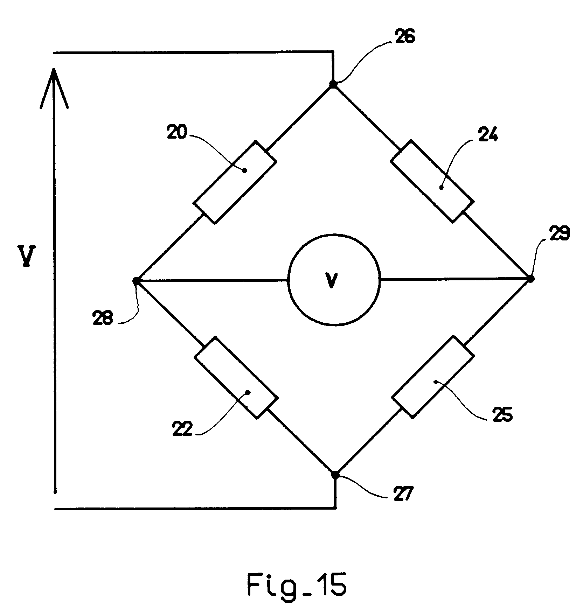

Dans le mode de réalisation représenté sur les figures 2 à 5, la barre de flexion 4 porte quatre jauges de contrainte disposées de la manière suivante : une première jauge 20 sensible aux variations de longueur de surface de la barre de flexion est fixée sur la face supérieure 21 au voisinage de la première extrémité 7 de ladite barre de flexion 4. Une seconde jauge 22 est fixée dans la même zone sur la face inférieure 23 de la barre de flexion 4. Une troisième jauge 24 est fixée sur la face supérieure 21 de la barre de flexion au voisinage de sa seconde extrémité 10, et une quatrième jauge 25 est fixée dans la même zone sur la face inférieure 23 de la barre de flexion. Les jauges 20, 22, 24 et 25 sont sensibles aux variations de longueur de la surface de la barre de flexion 4. De telles cellules sensibles aux variations de longueur sont bien connues dans la technique, et sont représentées schématiquement sur les figures 4 et 5. Elles comportent une série de filaments résistifs disposés longitudinalement et connectés en série entre deux bornes de connexion. Les jauges de contrainte 20, 22, 24 et sont connectées électriquement pour former un pont de Wheatstone, comme le représente la figure 15, entre deux bornes d'alimentation 26 et 27 destinées à être connectées à une source d'alimentation électrique V, et entre deux bornes de mesure 28 et 29 connectées à un organe de mesure v du signal électrique.

La variante représentée sur les figures 6 à 11 facilite le câblage des jauges. Dans cette variante, les jauges de contrainte sont réparties selon deux zones 11 et 12, sur la même face supérieure de la barre de flexion 4. Chaque zone 11 ou 12 comprend deux jauges de contrainte.

Dans le premier mode de réalisation représenté sur les figures 8 et 9, les jauges de contrainte 20 et 24 sont sensibles aux variations de longueur superficielle de la barre de flexion 4, tandis que les jauges de contrainte 22 et 25 sont sensibles aux variations de largeur superficielle de la barre de flexion 4. Les jauges 20 et 22 sont groupées dans la zone 11 de surface, et les jauges 24 et 25 sont groupées dans la zone 12 de surface.

Dans le mode de réalisation des figures 10 et 11, les quatre jauges de contrainte 20, 22, 24 et 25 sont sensibles aux variations de longueur superficielle de la barre de flexion 4. On groupe alors les jauges 20 et 25 dans la zone 11 de surface, et on groupe les jauges 22 et 24 dans la zone 12 de surface.

Dans les deux modes de réalisation, les jauges de contrainte sont connectées comme le représente la figure 15, de sorte que chaque branche de pont, telle que la branche formée par les jauges 20 et 22 en série, comprend une jauge à variation positive de résistance et une jauge à variation négative de résistance.

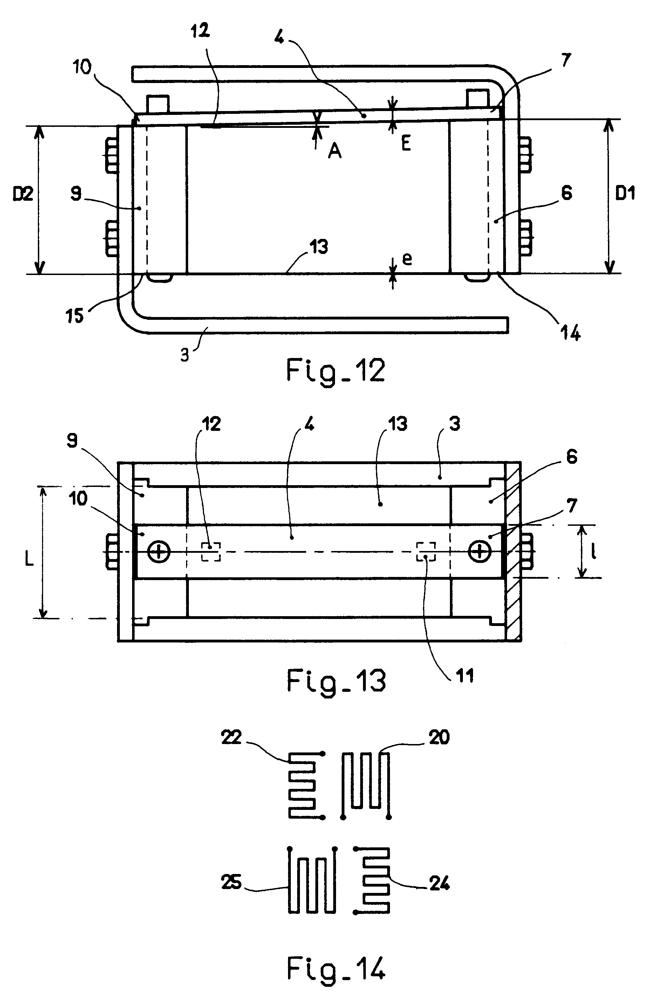

Dans le mode de réalisation des figures 12 à 14, la barre de flexion 4 comprend quatre jauges de contrainte reparties dans une seule zone, de surface réduite, disposée au voisinage de l'une ou l'autre des extrémités 7 et 10. Par exemple, les quatre jauges de contrainte sont disposées dans la zone 12 proche de la seconde extrémité 10 de la barre de flexion 4. Dans ce cas, la compensation des excentrations longitudinales de charge s'effectue en prévoyant un angle A entre la barre de flexion 4 et la lame secondaire 13, qui ne sont alors plus parallèles. Pour cela, les premières extrémités respectives 7 et 14 de la barre de flexion 4 et de la lame secondaire 13 sont écartées l'une de l'autre d'une distance D1 supérieure à la distance D2 séparant leurs secondes extrémités respectives 10 et 15. La valeur de l'angle A peut être déterminée expérimentalement, et dépend des caractéristiques géométriques et dimensionnelles des éléments formant la cellule de charge, et en particulier de la position choisie de la zone des jauges de contrainte. Cette valeur est généralement faible, par exemple inférieure au degré. On peut expliquer l'effet de compensation introduit par l'angle A par le fait qu'il introduit dans la zone des jauges de contrainte, lors des efforts de compression ou de traction longitudinales de la barre de flexion 4, une déformation de flexion en sens inverse de la déformation due au flambage.

Dans ce mode de réalisation des figures 12 à 14, on peut par exemple disposer les jauges de contrainte comme le représente la figure 14, avec deux jauges de contrainte 22 et 24 sensibles aux variations de longueur superficielle de la barre de flexion 4, et deux jauges de contrainte 20 et 25 sensibles aux variations de largeur superficielle de la barre de flexion 4.

Un mode de réalisation similaire peut être prévu en disposant les quatre jauges de contrainte dans la zone 11 proche de la première extrémité 7 de la barre de flexion 4.

Les connexions électriques sont grandement facilitées dans les modes de réalisation des figures 12 à 14 dans lesquels les quatre jauges de contrainte sont groupées dans une seule zone.

Dans les modes de réalisation qui ont été décrits, on utilise avantageusement quatre jauges de contrainte fixées sur la barre de flexion 4 et connectées en pont. La disposition des 4 jauges sur la barre réduit les inconvénients dûs aux dérives thermiques. On peut toutefois, sans sortir du cadre de l'invention, utiliser seulement deux jauges de contrainte fixées sur une même face de la barre de flexion et formant une première branche du pont de Wheatstone, par exemple les jauges 20 et 22, les deux autres jauges telles que les jauges 24 et 25 formant la deuxième branche du pont étant alors remplacées par des résistances électriques de mêmes valeurs fixes. Cette structure à deux jauges de contrainte et deux résistances est applicable à chacun des modes de disposition de jauges décrits précédemment et représentés sur les figures.

La présente invention n'est pas limitée aux modes de réalisation qui ont été explicitement décrits, mais elle en inclut les diverses variantes et généralisations contenues dans le domaine des revendications ci-après.

## Revendications

1. Cellule de charge à deux poutres de flexion et à jauges de contrainte pour mesure d'effort dans un appareil de pesage, comprenant :
   - une première poutre de flexion (4) élastiquement déformable disposée selon une direction sensiblement perpendiculaire à la direction (5) de l'effort à mesurer,
   - une seconde poutre de flexion (13) élastiquement déformable disposée selon une direction sensiblement parallèle à la première poutre de flexion,
   - un montant mobile (6) solidaire d'une première extrémité (7, 14) des poutres de flexion (4, 13) et généralement parallèle à la direction (5) de l'effort à mesurer, destiné à être solidaire d'un plateau (2) recevant la charge à mesurer (8),
   - un montant fixe (9) solidaire de la seconde extrémité (10, 15) des poutres de flexion (4, 13) et généralement parallèle à la direction (5) de l'effort à mesurer, destiné à être solidaire d'un socle (3),
   - des jauges de contrainte (20, 22, 24, 25), fixées sur la surface de la première poutre de flexion (4), et destinées à être raccordées électriquement à un circuit électrique de mesure pour fournir un signal électrique fonction de la déformation de flexion de la première poutre de flexion (4) sous l'action de l'effort mécanique appliqué entre les montants fixe (9) et mobile (6),

caractérisée en ce que :

- la première poutre de flexion (4) est une barre de flexion élastiquement flexible, peu aplatie, présentant une épaisseur (E) et une largeur (l), et portant les jauges de contrainte sur l'une au moins de ses faces supérieure ou inférieure généralement perpendiculaires à la direction de l'effort à mesurer,

- la seconde poutre de flexion (13) est une lame secondaire élastiquement flexible, plate et large, de faible épaisseur (e), de grande largeur (L), disposée dans le plan généralement perpendiculaire à la direction de l'effort à mesurer,

- l'épaisseur (E) de la barre de flexion (4) est supérieure à l'épaisseur (e) de la lame (13), la largeur (L) de la lame (13) étant supérieure à la largeur (l) de la barre de flexion (4).

2. Cellule selon la revendication 1, caractérisée en ce que :

- le montant mobile (6) est solidaire d'un plateau récepteur de charge (2) se développant selon une longueur (L1) parallèlement à la barre de flexion (4) et selon une largeur (L2) perpendiculairement à la barre de flexion (4),

- la lame secondaire (13) présente une largeur (L) sensiblement constante et sensiblement égale à la largeur (L2) du plateau récepteur de charge (2).

3. Cellule selon l'une des revendications 1 ou 2, caractérisée en ce que, dans le sens des flexions produites par l'effort à mesurer, la raideur de la barre de flexion (4) est très supérieure à la raideur de la lame secondaire (13).

4. Cellule selon l'une quelconque des revendications 1 à 3, caractérisée en ce que les jauges de contrainte (20, 22, 24, 25) sont réparties en au moins deux zones (11, 12) longitudinalement écartées l'une de l'autre sur la barre de flexion (4), à égales distances du milieu de la barre, de sorte que les jauges sont soumises à des contraintes distinctes lors de la flexion de la barre, et que la combinaison des jauges permet de produire un signal électrique sensiblement indépendant de l'excentration longitudinale de l'effort.

5. Cellule selon l'une quelconque des revendications 1 à 3, caractérisée en ce que :

- les jauges de contrainte (20, 22, 24, 25) sont disposées en une zone unique (12) de la barre de flexion (4), à l'écart de la zone centrale,

- les premières extrémités respectives (7, 14) de la barre de flexion (4) et de la lame secondaire (13) sont écartées l'une de l'autre d'une distance (D1) supérieure à la distance (D2) séparant leurs secondes extrémités respectives (10, 15), de sorte que la barre de flexion (4) fait avec la lame secondaire (13) un angle (A) dont la valeur est choisie de manière à compenser les effets de décentration longitudinale de l'effort.

6. Cellule selon l'une quelconque des revendications 1 à 5, caractérisée en ce qu'elle comprend quatre jauges de contrainte (20, 22, 24, 25) fixées sur la barre de flexion (4).

7. Cellule selon l'une quelconque des revendications 1 à 5, caractérisée en ce qu'elle comprend deux jauges de contrainte (20, 22) fixées sur la barre de flexion (4) et associées à deux résistances électriques (24, 25) de mêmes valeurs fixes.

8. Balance, caractérisée en ce qu'elle comprend :

- une cellule de charge (1) selon l'une quelconque des revendications 1 à 7,

- un plateau récepteur de charge (2) solidaire du montant mobile (6) et disposé selon un plan sensiblement parallèle à la barre de flexion (4) et à la lame secondaire (13),

- un socle (3) solidaire du montant fixe (9) et disposé selon un plan sensiblement parallèle au plateau récepteur (2),

- un circuit électrique connectant les jauges de contrainte selon un pont de Wheatstone (20, 22, 24, 25) entre deux bornes d'alimentation (26, 27) destinées à être connectées à une source d'alimentation électrique (V) et entre deux bornes de mesure (28, 29) connectées à un organe de mesure (v) de signal électrique.

**Patentansprüche**

1. Belastungszelle mit zwei Biegeträgern und mit Dehnungsmeßstreifen zur Kraftmessung in einem Wiegegerät, mit

- einem elastisch verformbaren ersten Biegeträger (4), der in einer Richtung im wesentlichen senkrecht zu der Richtung (5) der zu messenden Kraft angeordnet ist,

- einem elastisch verformbaren zweiten Biegeträger (13), der in einer Richtung im wesentlichen parallel zu dem ersten Biegeträger angeordnet ist,

- einer beweglichen Stütze (6), die mit einem ersten Ende (7, 14) der Biegeträger (4, 13) formschlüssig verbunden ist und im wesentlichen parallel zu der Richtung (5) der zu messenden Kraft verläuft und die zur formschlüssigen Verbindung mit einer die zu messende Belastung (8) aufnehmenden Platte (2) bestimmt ist,

- einer festen Stütze (9), die mit dem zweiten Ende (10, 15) der Biegeträger (4, 13) formschlüssig verbunden ist und im wesentlichen parallel zu der Richtung (5) der zu messenden Kraft verläuft und die zur formschlüssigen Verbindung mit einer Konsole (3) bestimmt ist,

- Dehnungsmeßstreifen (20, 22, 24, 25), die auf der Oberfläche des ersten Biegeträgers (4) befestigt sind und zum elektrischen Anschluß an einen elektrischen Meßstromkreis bestimmt sind, um ein elektrisches Signal als Funktion der Biegeverformung des ersten Biegeträgers (4) unter der Wirkung der mechanischen Kraft zu liefern, die zwischen den festen (9) und beweglichen (6) Stützen ausgeübt wird,

dadurch gekennzeichnet, daß

- der erste Biegeträger (4) ein elastisch flexibler, ein wenig abgeflachter Biegestab ist, der eine Dicke (E) und eine Breite (I) aufweist und die Dehnungsmeßstreifen auf wenigstens einer seiner oberen oder unteren Flächen trägt, die im wesentlichen senkrecht zu der Richtung der zu messenden Kraft verlaufen,

- der zweite Biegeträger (13) ein elastisch flexibler, flacher und breiter Sekundärstreifen ist, der eine geringe Dicke (e) und eine große Breite (L) aufweist und in der Ebene im wesentlichen senkrecht zu der Richtung der zu messenden Kraft angeordnet ist,

- die Dicke (E) des Biegestabes (4) größer als die Dicke (e) des Streifens (13) ist und die Breite (L) des Streifens (13) größer als die Breite (I) des Biegestabes (4) ist.

2. Zelle nach Anspruch 1, dadurch gekennzeichnet, daß

- die bewegliche Stütze (6) mit einer Belastungs-Aufnahmeplatte (2) formschlüssig verbunden ist, die sich über eine Länge (L1) parallel zu dem Biegestab (4) und über eine Breite (L2) senkrecht zu dem Biegestab (4) erstreckt,

- der Sekundärstreifen (13) eine Breite (L) aufweist, die im wesentlichen konstant ist und im wesentlichen gleich der Breite (L2) der Belastungs-Aufnahmeplatte (2) ist.

3. Zelle nach einem der Ansprüche 1 oder 2, dadurch gekennzeichnet, daß die Steifheit des Biegestabes (4) in der Richtung der Biegungen, die durch die zu messende Kraft erzeugt werden, wesentlich größer ist als die Steifheit des Sekundärstreifens (13).

4. Zelle nach einem der Ansprüche 1 bis 3, dadurch gekennzeichnet, daß die Dehnungsmeßstreifen (20, 22, 24, 25) in wenigstens zwei Bereiche (11, 12) unterteilt sind, die in der Längsrichtung des Biegestabes (4) mit gleichen Entfernungen zu der Stabmitte voneinander beabstandet sind, derart, daß die Streifen bei der Biegung des Stabes deutlichen Dehnungen unterworfen werden und die Kombination der Streifen die Erzeugung eines elektrischen Signals im wesentlichen unabhängig von der Mittenverlagerung der Kraft der Länge nach erlaubt.

5. Zelle nach einem der Ansprüche 1 bis 3, dadurch gekennzeichnet, daß

- die Dehnungsmeßstreifen (20, 22, 24, 25) in einem einzigen Bereich (12) des Biegestabes (4) seitlich des zentralen Bereichs angeordnet sind,

- die betreffenden ersten Enden (7, 14) des Biegestabes (4) und des Sekundärstreifens (13) voneinander in einer Entfernung (D1) beabstandet sind, die größer ist als die Entfernung (D2), die ihre zweiten Enden (10, 15) voneinander trennt, derart, daß der Biegestab (4) mit dem Sekundärstreifen (13) einen Winkel (A) einschließt, dessen Größe unter dem Gesichtspunkt eines Ausgleichs der Wirkungen der Mittenverlagerung der Kraft der Länge nach gewählt ist.

6. Zelle nach einem der Ansprüche 1 bis 5, dadurch gekennzeichnet, daß sie vier Dehnungsmeßstreifen (20, 22, 24, 25) aufweist, die auf dem Biegestab (4) befestigt sind.

7. Zelle nach einem der Ansprüche 1 bis 5, dadurch gekennzeichnet, daß sie zwei Dehnungsmeßstreifen (20, 22) aufweist, die auf dem Biegestab (4) befestigt und zwei elektrischen Widerständen (24, 25) mit gleichen Festwerten zugeordnet sind.

8. Waage, dadurch gekennzeichnet, daß sie

- eine Belastungszelle (1) nach einem der Ansprüche 1 bis 7,

- eine Belastungs-Aufnahmeplatte (2), die mit der beweglichen Stütze (6) formschlüssig verbunden und in einer Ebene im wesentlichen parallel zu dem Biegestab (4) und zu dem Sekundärstreifen (13) angeordnet ist,

- eine Konsole (3), die mit der festen Stütze (9) formschlüssig verbunden und in einer Ebene im wesentlichen parallel zu der Aufnahmeplatte (2) angeordnet ist, und
- einen elektrischen Stromkreis aufweist, der die Dehnungsmeßstreifen nach Art einer Wheatstonebrücke (20, 22, 24, 25) mit zwei Anschlußklemmen (26, 27) verbindet, welche zum Anschluß an eine elektrische Stromquelle (V) vorgesehen sind, sowie mit zwei Meßklemmen (28, 29), die mit einem Meßglied (v) für ein elektrisches Signal verbunden sind.

## Claims

1. Load cell with two flexion beams and strain gauges for force measurement in a weighing appliance, comprising :
   - a first resiliently deformable flexion beam (4) disposed in a direction substantially perpendicular to the direction (5) of the force to be measured,
   - a second resiliently deformable flexion beam (13) disposed in a direction substantially parallel to the first flexion beam,
   - a mobile upright (6) fixed to a first end (7, 14) of the flexion beams (4, 13) and generally parallel to the direction (5) of the force to be measured, intended to be fixed to a platform (2) receiving the load to be measured (8),
   - a fixed upright (9) fast with the second end (10, 15) of the flexion beams (4, 13) and generally parallel to the direction (5) of the force to be measured, intended to be fixed to a base (3),
   - strain gauges (20, 22, 24, 25), fixed on the surface of the first flexion beam (4) for electric connection to an electric measurement circuit for delivering an electric signal as a function of the deformation by flexion of the first flexion beam (4) under the action of the mechanical force applied between the fixed (9) and mobile (6) uprights,
   characterized in that :
   - the first flexion beam (4) is a resiliently deformable flexion bar, which is not very flat, having a thickness (E) and a width (I) and carrying the strain gauges on one at least of its upper or lower faces, generally perpendicular to the direction of the force to be measured,
   - the second flexion beam (13) is a resiliently flexible secondary blade, flat and wide, of small thickness (e), of large width (L) disposed in the plane generally perpendicular to the direction of the force to be measured,
   - the thickness (E) of the flexion bar (4) is greater than the thickness (e) of the blade (13), the width (L) of the blade (13) being greater than the width (I) of the flexion bar (4).

2. Cell according to claim 1, characterized in that :
   - the mobile upright (6) is fixed to a load receiving platform (2) extending over a length (L1) parallel to the flexion bar (4) and over a width (L2) perpendicularly to the flexion bar (4),
   - the secondary blade (13) has a substantially constant width (L) substantially equal to the width (L2) of the load receiving platform (2).

3. Cell according to one of claims 1 or 2, characterized in that, in the direction of the flexions produced by the force to be measured, the stiffness of the flexion bar (4) is very much greater than the stiffness of the secondary blade (13).

4. Cell according to any one of claims 1 to 3, characterized in that the strain gauges (20, 22, 24, 25) are divided into at least two zones (11, 12) spaced apart longitudinally from each other on the flexion bar (4) at equal distances from the middle of the bar, so that the gauges are subjected to separate straines during flexion of the bar, and so that the combination of the gauges produces an electric signal substantially independent of the longitudinal off-centering of the force.

5. Cell according to any one of claims 1 to 3, characterized in that :
   - the strain gauges (20, 22, 24, 25) are disposed in a single zone (12) of the flexion bar (4), spaced away from the central zone,
   - the first respective ends (7, 14) of the flexion bar (4) and of the secondary blade (13) are spaced apart from each other by a distance (D1) greater than distance (D2) separating their second respective ends (10, 15) so that the flexion bar (4) forms with the secondary blade (13) an angle (A) whose value is chosen so as to compensate for the effects of longitudinal off-centering of the force.

6. Cell according to any one of claims 1 to 5, characterized in that it comprises four strain gauges (20, 22, 24, 25) fixed to the flexion bar (4).

7. Cell according to any one of claims 1 to 5, characterized in that it comprises two strain gauges (20, 22) fixed to the flexion bar (4) and associated with two electric resistances (24, 25) having the same fixed values.

8. Scale, characterized in that it comprises :
   - a load cell (I) according to one of claims 1 to 7,

- a load receiving platform (2) fast with the mobile upright (6) and disposed in a plane substantially parallel to the flexion bar (4) and to the secondary blade (13),
- a base (3) fast with the fixed upright (9) and disposed in a plane substantially parallel to the load receiving platform (2),
- an electric circuit connecting the strain gauges in a Wheatstone bridge (20, 22, 24, 25) between two supply terminals (26, 27) connected to an electric supply source (V) and between two measurement terminals (28, 29) connected to a means (v) for measuring the electric signal.

Fig_1

Fig_2

Fig_3

Fig_4

Fig_5

Fig_6

Fig_10

Fig_11

Fig_7

Fig_8

Fig_9

Fig_12

Fig_13

Fig_14

Fig_15